# EUROPÄISCHE PATENTSCHRIFT

(11) **EP 2 363 024 B1**
(45) Veröffentlichungstag und Bekanntmachung des Hinweises auf die Patenterteilung: **12.10.2016**
(21) Anmeldenummer: 11001430.5
(22) Anmeldetag: 22.02.2011
(51) Int. Cl.: A01N 37/46, A01N 47/44, A23B 4/20, A22C 13/00, A47K 7/03, A23L 3/3526, D06M 13/342, A01P 1/00

(54) **Antimikrobiell ausgerüstete Folien, Schwämme und Schwammtücher**
Antimicrobial films, sponges and sponge cloths
Feuilles, éponges et tissus éponges revêtus antimicrobiens

(30) Priorität: 02.03.2010 DE 102010009852
(43) Veröffentlichungstag der Anmeldung: 07.09.2011
(73) Patentinhaber: Kalle GmbH, 65203 Wiesbaden (DE)
(72) Erfinder: Pohl, Matthias, Dr., 61476 Kronberg im Taunus (DE); Hammer, Klaus-Dieter, Dr., 55120 Mainz (DE); Lutz, Walter, Dr., 65239 Hochheim (DE)
(74) Vertreter: Plate, Jürgen

(56) Entgegenhaltungen:
- WO-A1-03/094638
- WO-A2-02/087328
- DE-A1- 3 240 847
- DE-A1- 3 606 195

## Beschreibung

Die Erfindung betrifft eine antimikrobiell ausgerüstete Folie auf der Basis von Biopolymeren oder Textilmaterial sowie antimikrobiell ausgerüstete Schwämme oder Schwammtücher auf Basis von regenerierter oder gefällter Cellulose. Die Folien sind bevorzugt schlauchförmig und zur Verpackung von Nahrungsmitteln, speziell von Wurstwaren, vorgesehen.

Antimikrobiell ausgerüstete Folien und Schwammtücher sind bereits bekannt. Ebenso sind antimikrobiell ausgerüstete Schlauchfolien bekannt, die als Nahrungsmittelhüllen eingesetzt werden. Das gilt insbesondere für füllfertig vorbefeuchtete Cellulose-Faserdärme. Diese weisen typisch einen Feuchteanteil auf von 20 bis 40 Gew.-%, bezogen auf ihr Gesamtgewicht. Weiterhin sind in der US 2007/0020366 A1 Schrumpfbeutel aus Kunststoff beschrieben, die mit antimikrobiellen Mitteln, wie saurem Calciumsulfat (ACS) oder Lauramidargininester, speziell Ethyl-lauroyl-arginat hydrochlorid, besprüht bzw. imprägniert werden, um beispielsweise Schinken zu konservieren.

Lebensmittelhüllen auf der Basis von Polysacchariden oder beschichteten Textilmaterialien für Wurstprodukte mit einem Feuchtegehalt über 20 %, die zur wässerungsfreien Verarbeitung schimmelfrei zu halten sind, lassen sich:
a) durch Präparationen mit fungiziden Substanzen, wie Sorbinsäure, Benzoesäure, Propionsäure, *para*-Hydroxy-benzoesäureester oder ihre Salze (US-P2979419),
b) durch Absenken des a_{w}-Wertes (Wasseraktivität) unter 0,94 mit Glycerin und/oder Propandiol (DE 2721427) oder
c) durch Sterilisation vor dem Verpacken durch Bestrahlung mit Gamma-Strahlen oder Behandeln mit Oxidationsmitteln (H₂O₂, Peroxide) keimfrei machen.

Wesentlich komplizierter ist es, Lebensmittelhüllen für Wurstprodukte herzustellen, die nach dem Verarbeiten, d.h. nach Wässern, Füllen und dem Kochen bzw. Brühen auch bei Dauer- oder Brühwurst bzw. Kochwurst zuverlässig schimmelfrei bleiben.

Dafür sind an Polyamin-polyamid-epichlorhydrinharze (DE 32 40 847) oder an Casein/Glyoxalüberzüge (EP 0 263 434) salzartig gebundene Sorbinsäure bzw. schwerlösliche Fungizide, wie Glycerinmonolaurat (EP 0 141 066 = US 4,662,403) oder Isothiazolone (EP 0 330 996 = US 4,940,615) bekannt geworden. Die wirksamste Konservierung wurde allerdings mit Dimethyldidecylammoniumchlorid erzielt. Die Ammonium-Ionen gehen dabei eine ionische Bindung mit anionischen Gruppen, wie beispielsweise mit den Carboxylatgruppen der Cellulose oder des Kollagens (bei kollagenbeschichteten Textildärmen) oder den Aminogruppen des Polyamids oder Kollagens ein. Auf diese Weise wird eine Depotwirkung erreicht.

Celluloseschwämme und -schwammtücher, die beispielsweise mit einem Feuchtegehalt von mindestens 70 % weichgemacht sind, lassen sich verpackt bis zum Gebrauch schimmelfrei halten beispielsweise durch die oben genannten fungiziden Substanzen oder durch Sterilisation mit Gamma-Strahlen oder Peroxiden. Wesentlich schwieriger ist die Aufrechterhaltung eines bioziden Schutzes von Celluloseschwämmen und - schwammtüchern nach mehrmaligem Waschen.

Als ein wirksames Fungizid mit Depotwirkung, das nur langsam durch Wasser entfernt werden kann, hat sich Alkyldimethylbenzylammoniumchlorid aufgrund des substantiven Aufziehens der Ammoniumgruppe auf Baumwollfasern, die als innere Versteifung der Schwammtücher eingesetzt werden, erwiesen.

Die Präparationen mit ungebundenen sowie leicht löslichen Fungiziden und Bakteriziden, wie unter a) erwähnt, die Methoden nach b), c), der Antrag durch bloßes Aufsprühen auf Kunststoffoberflächen, wie Schrumpfbeuteln aber auch die Präparationen mit Resamin-, Caseinsorbat, Glycerinmonolaurat oder Isothiazolonen bieten bei hohen Feuchten und starker Kontamination bzw. starkem Keimdruck keinen ausreichenden Schutz vor allem bei Dauer- und Brühwürsten. Bei höherem Sporendruck, z.B. beim Reifen von Dauerwürsten neben schimmelgereiften Dauerwürsten oder beim Lagern zweitverpackter Brühwürste sind sie völlig ungeeignet.

Bei sehr hohem Sporendruck und sehr langer Lagerdauer unter extremen Bedingungen ist auch eine Präparation mit Dimethyldidecylammoniumchlorid nicht sicher genug, insbesondere bei langem Wässern der Hüllen vor dem Füllen und zu geringer Auftragsmenge.

In der US 2009/0023790 A1 sind antimikrobiell wirksame Zusammensetzungen offenbart, die a) N-Methyl-1,2-benzoisothiazolin-3-on und b) mindestens ein weiteres Mikrobiocid umfassen. Das weitere Mikrobiocid ist Ethyl-lauroyl-arginat-hydrochlorid (LAECI), Cocamidopropyl-N-2-hydroxyethylcarbamoyl-methyl-dimethyl-ammoniumchlorid, Cu(II)-2-Aminoethanolat und Didecyl-dimethyl-ammoniumchlorid, Didecyl-dimethyl-ammoniumcarbonat und -bicarbonat, Cu(II)-Aminoethanolat, Glycerinmonolaurat, Propylenglykol-monolaurat oder Propylenglykol-caprylat. Die Zusammensetzungen verhindern das Wachstum von Mikroorganismen auf einer Vielzahl von Produkten, darunter Nahrungsmittelverpackungen aus Plastik oder Papier und Wischtücher. Sie lassen sich jedoch auswaschen und verlieren so rasch an Wirkung, da sie mit dem Träger nicht fest verbunden sind.

Bei Celluloseschwamm- und -schwammtüchern beispielsweise führen die Präparationen unter a) und c) bei mehrfachem Gebrauch zu Schimmel- und Bakterienbefall. Auch die Wirkung der Präparation mit Alkyldimethylbenzylammoniumchlorid oder Isothiazolonen nimmt mit zunehmenden Auswaschvorgängen allmählich ab.

In der WO 03/094638 A1 sind konservierend wirkende Mittel offenbart, die aus einem anionischen Hydrochlorid und einem kationischen konservierend Stoff besteht. Der konservierend wirkende Stoff wird erhalten durch Kondensation von Fettsäuren und veresterten zweiwertigen Aminosäuren. Ein bevorzugter kationischer konservierender Stoff ist der Ethylester von N-Lauroyl-arginin-hydrochlorid (LAE). Das anionische Hydrokolloid ist bevorzugt Agar, Pectin, modifizierte Cellulose, Alginat, Carrageenan, Acacia Gummi oder Xanthan Gummi. Das konservierend wirkende Mittel ist insbesondere zum Haltbarmachen von Nahrungsmitteln oder Kosmetikprodukten vorgesehen. Es kann dem Nahrungsmittel direkt zugesetzt werden. Das Nahrungsmittel kann auch in eine Lösung des anionischen Hydrokolloids und anschließend in eine Lösung des kationischen konservierenden Stoffs eingetaucht werden, so dass ein konservierend wirkender Überzug entsteht. Im Beispiel 2 der WO 03/094638 A1 ist offenbart, wie eine Wurst in einem synthetischen Darm mit einer antimikrobiellen Beschichtung versehen wird, indem sie in ein Bad eingetaucht wird, das eine 0,5 %ige Xanthangummi-Lösung enthält, und anschließend in ein Bad, das eine 0,2 %ige LAE-Lösung enthält.

Es bestand daher nach wie vor die Aufgabe, Nahrungsmittelhüllen auf Basis von Biopolymeren, insbesondere von Polysacchariden und/oder Proteinen, oder unbeschichtetem oder beschichtetem Textilmaterial sowie Schwämme und Schwammtücher auf Basis von regenerierter oder gefällter Cellulose zur Verfügung zu stellen, die dauerhaft antimikrobiell ausgerüstet sind. Die antimikrobielle Wirkung soll auch nach mehrfachem Kontakt mit Wasser möglichst wenig nachlassen. Dies ist besonders für Schwämme und Schwammtücher auf Cellulosehydratbasis von Bedeutung.

Es war nicht nur eine weitere Steigerung der fungiziden und bakteriziden (antimikrobiellen) Wirkung notwendig, sondern es mussten Substanzen gefunden werden, die sowohl in der ursprünglichen Form als auch nach hydrolytischer Spaltung lebensmitteltauglich sind. Es hat sich als außerordentlich schwierig erwiesen, eine zuverlässige Wirkung gegen Pilze und Bakterien durch toxikologisch völlig unbedenkliche Mittel zu gewährleisten.

Gelöst wurde diese anspruchsvolle Aufgabe mit einem Ester einer basischen α-Aminosäure, wie Lysin oder Arginin dessen α-Aminogruppe acyliert ist mit einer Fettsäure, wie Laurinsäure oder Stearinsäure.

Gegenstand der vorliegenden Erfindung ist demgemäß eine Folie auf Basis von Biopolymeren oder Textilmaterial sowie ein Schwamm oder ein Schwammtuch auf Basis von regenerierter oder gefällter Cellulose, dadurch gekennzeichnet, daß die Folie, der Schwamm bzw. das Schwammtuch imprägniert oder beschichtet ist mit einem Aminosäureester einer basischen Aminosäure, dessen α-Aminogruppe mit einer Fettsäure acyliert ist, und/oder dem entsprechenden Hydrochlorid, wobei der Aminosäureester bzw. dessen Hydrochlorid kovalent an die Folie, den Schwamm oder das Schwammtuch gebunden ist. Vorzugsweise ist der Aminosäureester bzw. dessen Hydrochlorid auch noch ionisch an die Folie, den Schwamm oder das Schwammtuch gebunden.

Unter dem Begriff "Biopolymere" sollen im Zusammenhang mit der vorliegenden Erfindung insbesondere Polysaccharide, Proteine sowie Gemische davon verstanden werden. Polysaccharide sind insbesondere Cellulose, Stärke, Alginsäure bzw. Alginat oder Derivate davon, beispielsweise Stärkeacetat. Proteine sind insbesondere Kollagen(fasern), Gelatine und Gemische davon.

In einer bevorzugten Ausführungsform ist die Folie eine schlauchförmige Nahrungsmittelhülle. Sie kann insbesondere auf regenerierter oder gefällter Cellulose basieren und gegebenenfalls eine Faserverstärkung umfassen. Als Faserverstärkung dient dabei häufig ein Papier aus Hanffasern oder Abacafasern. Solche Cellulose-Faserdärme sind seit langem bekannt und kommerziell erhältlich. Die schlauchförmige Folie ist bevorzugt auf der Außenseite mit dem acylierten Aminosäureester(hydrochlorid) imprägniert bzw. beschichtet.

In einer anderen bevorzugten Ausführungsform wird eine Hülle auf Basis von unbeschichtetem oder beschichtetem Textilmaterial eingesetzt. Unter dem Begriff "Textilmaterial" sollen dabei insbesondere Gewebe, Gewirke, Gestricke oder Vliese verstanden werden. Je nach der vorgesehenen Verwendung kann das Textilmaterial beschichtet sein beispielsweise mit Acrylharzen, Polyvinylidenchlorid (PVDC) oder Protein (insbesondere Kollagen und/oder Kollagenfasern und/oder Gelatine). Acrylharze und PVDC können beispielsweise in Form einer Dispersion aufgebracht werden. Es können auch mehrere Schichten gleicher oder unterschiedlicher Zusammensetzung auf das Textilmaterial aufgebracht sein. Vorzugsweise wird das Textilmaterial nur auf einer Seite beschichtet. Durch die Beschichtung(en) läßt sich die Wasserdampf- und/oder Sauerstoff-Durchlässigkeit der Hülle bedarfsgerecht einstellen. Die Fasern für das Textilmaterial können aus Baumwolle, Zellwolle, Seide, Polyamid, Polyester oder Gemischen davon bestehen. Vor dem Beschichten weist das Textilmaterial zweckmäßig ein Gewicht von 15 bis 150 g/m², insbesondere von 20 bis 100 g/m², auf. Verfahren und Vorrichtungen zum Beschichten sind allgemein bekannt. Beschichtet wird das Textilmaterial zweckmäßig als Flachware. Um eine schlauchförmige Hülle zu erhalten, kann das Textilmaterial zu einem Schlauch mit überlappenden Längskanten geformt werden. Der Überlappungsbereich wird dann mit einer Längsnaht fixiert. Das kann beispielsweise eine genähte oder geklebte Naht oder eine Siegelnaht sein. Nach dem Beschichten und Trocknen, jedoch vor dem Imprägnieren mit der antimikrobiell wirksamen Substanz, beträgt das Gewicht des Textilmaterials allgemein 30 bis 200 g/m², insbesondere 40 bis 150 g/m².

Die antimikrobiell wirksame Substanz, im folgenden auch als N-Acyl-aminosäureester bezeichnet, kommt dabei vorzugsweise als quaternäre Ammoniumverbindung, vorzugsweise als Hydrochlorid, zum Einsatz. Sie kann als alleiniger Wirkstoff oder in Kombination mit anderen antimikrobiellen Mitteln, wie *para*-Hydroxybenzoesäure(C₁-C₆)alkylestern, deren Salzen, Benzoesäure, Sorbinsäure und deren Salze, Propionsäure, etc. eingesetzt werden.

Die α-Aminosäure ist bevorzugt eine L-α-Aminosäure, wie sie in der Natur in tierischen Proteinen vorkommt. Bevorzugt sind die basischen Aminosäuren Lysin, Histidin und Arginin. Bei dem Ester einer Aminosäure handelt es sich allgemein um einen - vorzugsweise geradkettigen - (C₁ - C₆)Alkylester, insbesondere einen Methyl-, Ethyl-, Propyl, Isopropyl-, Butyl-, Isobutyl-, *tert*.-Butyl-, Pentyl-, Isopentyl-, Neopentyl-, Hexyl- oder Isohexylester.

Die Fettsäure ist allgemein eine C₁₂- bis C₂₀-Fettsäure, bevorzugt eine Fettsäure mit 12, 14, 16, 18 oder 20 Kohlenstoffatomen. Gesättigte Fettsäuren sind bevorzugt. Besonders bevorzugt sind Laurinsäure, Myristinsäure, Palmitinsäure und Stearinsäure. Die Strukturformel eines bevorzugten N-Acyl-α-aminosäureester-hydrochlorids ist nachfolgend abgebildet:

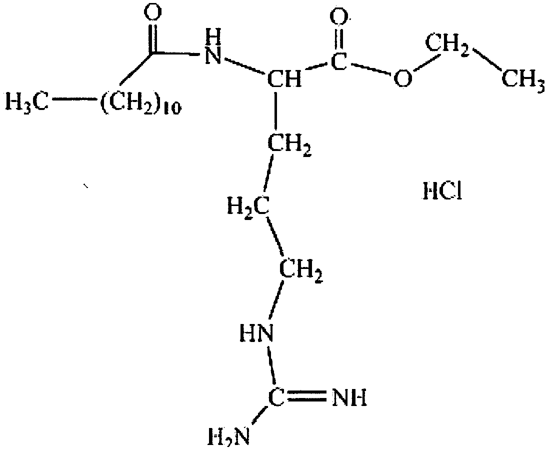

### Beispiel: N^{α}-Lauroyl-L-argininethylester-monohydrochlorid (LAECI) (CAS Nr. 60372-77-2)

Die genannten α-Aminosäure-Derivate wie auch Verfahren zu ihrer Herstellung sind bekannt. Allgemein wird die Aminosäure mit einem Alkanol, beispielsweise Ethanol, verestert und anschließend mit einem Fettsäure-Derivat, beispielsweise Lauroylchlorid, umgesetzt. Verwendung gefunden hat LAECI bisher als Konservierungsmittel insbesondere in Nahrungsmitteln, Kosmetika und Haarshampoo.

Die quaternären Ammoniumgruppen durch das Hydrochlorid bewirken eine feste, elektrostatische (salzartige) Bindung mit den anionischen funktionellen Gruppen, wie beispielsweise mit den Carboxylgruppen der Cellulose, des Alginats oder des Kollagens oder festgebundenen Präparationsprodukten auf der Oberfläche.

Das N-Acyl-aminosäureester-Hydrochlorid kann in Form einer bis zu 20 gew.-%igen Lösung in Propylenglykol eingesetzt werden. Es ist löslich zu 5 Gew.-% in Ethanol oder Glycerin und mischbar mit Wasser. Die Wirksubstanz ist kovalent an die Hülle gebunden. Dazu werden insbesondere Aldehyde verwendet, wofür prinzipiell Formaldehyd, Acetaldehyd, Dialdehyde, wie Glyoxal, Glutaraldehyd oder andere in Frage kommen. Der Anteil der Aldehyde beträgt allgemein 3 bis 5 Gew.-%, bezogen auf das Gewicht der Wirksubstanz.

Die Wirksubstanz wird in der Präparationslösung in einer Konzentration von 2 bis 30 Gew.-%, vorzugsweise 5 bis 10 Gew.-%, in Polyethylenglykol (PEG), Propandiol, Glycerin und/oder Wasser gelöst, angewandt. Zusätzlich kann dem quaternären Aminosäure-Fettsäureester eine weitere antimikrobielle Substanz zugesetzt werden, beispielsweise ein *para*-Hydroxybenzoesäurealkylester, ein Salz davon, Benzoesäure, Sorbinsäure, ein Sorbinsäuresalz, Propionsäure, etc. Präpariert wird vorzugsweise der Geldarm beispielsweise bei Cellulosehüllen oder die Kollagen beschichtete Textilhülle vor dem Einlauf in den Trockner, entweder durch Besprühen oder mit einem Walzenantragswerk. Beim Trocknen (unter Wärmeeinwirkung) findet dann eine kovalente Bindung nach Addition der Aldehyde an eine NH₂-Gruppe (Imin bzw. Schiff'sche Base) oder an eine OH-Gruppe, über Methylole mit der Hüllenoberfläche statt.

Zur festen Fixierung der Wirksubstanz an Hüllenoberflächen aus beispielsweise Cellulose, Alginat oder unbeschichteten oder beschichteten Textilien bietet sich außerdem auch ein Harz, z.B. ein Polyamin-Polyamid-Epichlorhydrinharz an, das in einer Konzentration von 1 bis 5 Gew.-%, vorzugsweise 2 bis 3 Gew.-% (Feststoff) angewandt wird. Auch damit wird eine kovalente Bindung des Wirkstoffs erreicht. Für die Präparation wässerungsfreier Hüllen, d.h. von konfektionierten Lebensmittelhüllen mit einem Feuchtegehalt über 20 %, ist es zweckmäßig, das reine Produkt, d.h. ohne Vernetzungs- oder Einbettungsmittel, zu verwenden. Durch die Bindung an die Oberfläche, insbesondere die kovalente Bindung mit Hilfe von Aldehyden, wie beispielsweise Glyoxal, wird die Präparation wässerungs- und brühbeständig. Es wird auf diese Weise eine Depotwirkung erzielt, was speziell bei Schwammtüchern von großer Bedeutung ist.

Schimmel- und Bakterienbefall ist bei Wurstwaren und anderen Lebensmitteln ein gravierendes Problem, das zu enormen Verlusten führen kann; ohne Präparation ist ihre Lebensdauer begrenzt. Mit dem kationischen Ester aus einer Aminosäure und einer Fettsäure, wie N^{α} -Lauroyl-*L*-argininethylester-monohydrochlorid (LAECI) oder N^{α}-Lauroyl-lysinethylester-monohydrochlorid (LLECI) wurde nun eine völlig überraschende und ungewöhnliche Problemlösung gefunden, die nicht nur aus toxikologischen Gründen ungewöhnlich ist, sondern auch für die Präparation besondere Voraussetzungen bietet, weil außer einer salzartigen Bindung auch eine kovalente Bindung möglich ist. Das Ergebnis ist eine lang anhaltende Depotwirkung und eine Eignung für eine breite Anwendungspalette, nämlich von wässerungsfreien Raupen bis zu Brühwursthüllen beispielsweise für innenbeschichteten Cellulose-Faserdarm-Typen.

Die Applikation ist ohne zusätzliche Verfahrensschritte möglich, nämlich entweder durch Tränken oder Besprühen des Geldarms vor dem Trocknereinlauf oder durch Besprühen beim Umrollen zur Befeuchtung für wässerungsfreies Material. Besonders wichtig ist, dass auch Brühwürste in Zweitverpackung und Dauerwürste neben Schimmelreifung ohne Befall bleiben. Mit dieser neuen, kovalent gebundenen bioziden Ausrüstung ist es möglich geworden, Lebensmittelhüllen auf der Basis von Polysacchariden, wie Cellulose, Stärke oder Alginat, oder von Textilmaterialien, die beispielsweise mit Kollagen oder thermoplastischen Polymeren beschichtet sind sowie Schwammtücher auf Basis von Cellulosehydrat vor Schimmel- und Bakterienbefall zu schützen. Der Schutz bleibt auch nach mehreren Waschvorgängen erhalten, so dass insbesondere die Schwammtücher über einen längeren Zeiträume eingesetzt werden können.

Die Applikation der biociden Ausrüstung lässt sich entweder durch Zusatz zur Weichmacherlösung, beim Besprühen von wässerungsfreier Ware oder durch Aufsprühen vor dem Trocknereinlauf für trocken ausgelieferte Ware vornehmen. Bei einer schlauchförmigen Nahrungsmittelhülle befindet sich die antimikrobielle Imprägnierung bzw. Beschichtung vorzugsweise auf der Außenseite.

Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich.

### Beispiel 1:

Ein außenviskosierter Cellulosehydratschlauch mit einer Faserpapiereinlage vom Kaliber 60 wurde vor dem Trocknereingang durch eine Tränkwanne gefahren, die eine 4 % wäßrige Lösung LAECI und 3 % Glyoxal bezogen auf die Wirksubstanz enthielt.

Ins Schlauchinnere wurde eine übliche Haftimprägnierlösung (Casein + Glyoxal) eingefüllt; der Schlauch im aufgeblasenen Zustand getrocknet und auf 16 bis 18 % befeuchtet. Beim Raffen der Hülle wurde dann durch Innendornbesprühung der Feuchtegehalt auf 25 ± 2 % erhöht; die in Folie eingeschweißten wässerungsfreien Raupen zeigten bei beliebig langer Lagerdauer unter normalen sowie Tropenbedingungen keinen Schimmel- oder Bakterienbefall.

Bei der Dauerwurstreifung war ebenfalls keine Schimmelbildung zu beobachten.

### Beispiel 2:

Ein doppelviskosierter Cellulosehydrat-Faserschlauch vom Kaliber 60 mit einer Viskoseverteilung 30/70 (außen/innen) wurde im Gelzustand vor dem Trocknereingang durch eine wäßrige Lösung gefahren, die 5 % LAECI, 1 % para-Hydroxybenzoesäuremethylester und 3 % Glyoxal, bezogen auf die Wirksubstanz, enthielt.

Ins Schlauchinnere wurde eine übliche Haftimprägnierung für langlebige Dauerwurst eingefüllt; der Schlauch dann in aufgeblasenem Zustand auf 8 bis 10 % Feuchte getrocknet. Die Raupen wurden mit Dauerwurstbrät gefüllt; beim Reifen blieben sie auch neben schimmelgereiften Würsten schimmelfrei.

### Beispiel 3:

Ein doppelviskosierter Cellulosehydratschlauch vom Kaliber 60 mit einer Viskoseverteilung 40/60 (außen/innen) wird im Gelzustand vor dem Trocknereingang durch eine wässrige Lösung gefahren, die 6 % LAECI und 3 % Glyoxal, bezogen auf das Gewicht der Wirksubstanz, enthielt.

Im Schlauchinneren wurde eine übliche Verankerungslösung eingefüllt. Der Schlauch wurde, wie üblich, in aufgeblasenem Zustand getrocknet, aufgewickelt und in einem zweiten Verfahrensschritt mit einer PVDC-Dispersion innen beschichtet. In einseitig abgebundene Abschnitte der Wursthülle wurde Fleischwurstbrät gefüllt, die Würste wurden anschließend in Folie zweitverpackt.

Nach 6-wöchiger Lagerdauer war noch kein Schimmelbefall festzustellen. Auf den ausgekochten, beimpften Dauerproben entwickelte sich nach einer 4-wöchigen Bebrütungsdauer ebenfalls kein Schimmel.

### Beispiel 4:

Ein außenviskosierter Cellulosehydratschlauch vom Kaliber 60 wird im Gelzustand vor dem Trocknen mit einer Lösung, bestehend aus Propandiol, Wasser (Mischungsverhältnis 40:60), 3 % N ^{α}-Lauroyl-argininethylester-hydrochlorid (LAECI) sowie 3 Gew.-% (Feststoff) eines Polyamin-Polyamid-Epichlorhydrinharzes (Kymene^{®} G3 x-cel der Firma Hercules), behandelt. Der Schlauch wird, wie üblich, in aufgeblasenem Zustand getrocknet und auf 16 bis 18 % angefeuchtet.

Die Hüllen wurden danach für eine wässerungsfreie Verarbeitbarkeit durch Umrollen auf eine Feuchte von 25± 2 % gebracht und konfektioniert. Trotz einer anschließenden Verpackung der Raupen in Folie sowie einer Lagerung unter extremen Bedingungen, konnte, selbst nach mehrmonatiger Lagerdauer, weder Schimmel- noch Bakterienbefall beobachtet werden.

### Beispiel 5:

Eine Schwammtuchbahn, verstärkt mit Baumwollfasern, wurde von einer Abrollung durch ein Weichmacherbad geführt, das 18 % MgCl₂ und 82 % Wasser enthielt. Dieses Weichmacherbad wurde mit 0,5 % N^{α}-Lauroyl-arginin-ethylestermonohydrochlorid (LAECI) und 5 % Glutaraldehyd (bezogen auf die Wirksubstanz) versetzt. Die vollständig getränkte Schwammtuchbahn wurde mit einem Quetschwalzenpaar von überschüssiger Flüssigkeit befreit, so dass das weichgemachte Schwammtuch einen Feuchtigkeitsgehalt von 100 bis 200 %, bezogen auf sein Trockengewicht, aufwies.

## Patentansprüche

1. Antimikrobiell ausgerüstete Folie auf Basis von Biopolymeren oder Textilmaterial oder antimikrobiell ausgerüsteter Schwamm bzw. antimikrobiell ausgerüstetes Schwammtuch auf Basis von regenerierter oder gefällter Cellulose, **dadurch gekennzeichnet, daß** die Folie bzw. das Schwammtuch imprägniert oder beschichtet ist mit mindestens einem α-Aminosäureester einer basischen Aminosäure, dessen α-Aminogruppe mit einer Fettsäure acyliert ist, oder dem Hydrochlorid davon, wobei der α-Aminosäureester kovalent an die Folie, den Schwamm oder das Schwammtuch gebunden ist.

2. Folie gemäß Anspruch 1, **dadurch gekennzeichnet, daß** die basische Aminosäure Arginin, Histidin oder Lysin ist.

3. Folie gemäß Anspruch 1, **dadurch gekennzeichnet, daß** der α-Aminosäureester zusätzlich ionisch an die Folie, den Schwamm oder das Schwammtuch gebunden ist.

4. Folie gemäß Anspruch 1, **dadurch gekennzeichnet, daß** sie schlauchförmig ist und die Außenseite mit dem acylierten α-Aminosäureester oder dem acylierten α-Aminosäureester-hydrochlorid imprägniert oder beschichtet ist.

5. Folie gemäß Anspruch 1, **dadurch gekennzeichnet, daß** die Biopolymere Polysaccharide, Proteine oder Gemische davon sind, bevorzugt Cellulose, Stärke, Alginsäure/Alginat, Kollagen, Kollagenfasern, Gelatine oder Gemische davon.

6. Folie gemäß Anspruch 4, **dadurch gekennzeichnet, daß** es sich um eine Folie auf Basis von regenerierter oder gefällter Cellulose handelt, die eine Verstärkung aus einem Faserpapier umfaßt.

7. Folie gemäß Anspruch 4, **dadurch gekennzeichnet, daß** es sich um eine Folie auf Basis von beschichtetem Textilmaterial handelt.

8. Schwammtuch gemäß Anspruch 1, **dadurch gekennzeichnet, daß** es eine Verstärkung aus Fasern, bevorzugt aus Baumwollfasern, oder aus einem Kunststoff-Netz umfaßt, wobei die Fasern vorzugsweise eine Länge von 0,3 bis 25 mm aufweisen.

9. Folie oder Schwammtuch gemäß Anspruch 1, **dadurch gekennzeichnet, daß** das acylierte α-Aminosäureester-hydrochlorid N^{α}-Lauroyl-L-argininethylestermonohydrochlorid (LAECI), N^{α}-Lauroyl-L-argininmethylester-monohydrochlorid (LAMCI) oder N^{α}-Lauroyl-L-Lysinethylester-monohydrochlorid (LLECI) ist.

10. Folie oder Schwammtuch gemäß einem oder mehreren der Ansprüche 1 bis 9, **dadurch gekennzeichnet, daß** der acylierte α-Aminosäureester bzw. das Hydrochlorid davon mit Hilfe von Mono- oder Dialdehyden oder Polyamin-Polyamid-Epichlorhydrin-Harzen an das Folien- oder Schwammtuchmaterial kovalent gebunden ist.

11. Folie oder Schwammtuch gemäß einem oder mehreren der Ansprüche 1 bis 10, **dadurch gekennzeichnet, daß** der acylierte α-Aminosäureester bzw. das Hydrochlorid davon kombiniert ist mit mindestens einem weiteren antibakteriell wirksamen Mittel, bevorzugt mit einem para-Hydroxy-benzoesäurealkylester oder einem Salz davon, Benzoesäure oder einem Benzoat, Sorbinsäure oder ein Sorbat.

12. Verfahren zur Herstellung einer Folie, eines Schwamms oder eines Schwammtuchs gemäß einem oder mehreren der Ansprüche 1 bis 11, **dadurch gekennzeichnet, daß** sie mit einer Lösung mindestens eines N-Acyl-α-aminosäurester-hydrochlorids behandelt wird, wobei die Lösung als Lösemittel vorzugsweise Wasser und/oder einen ein- oder mehrwertigen Alkohol, besonders bevorzugt Ethanol, Propandiol, Polyethylenglykol oder Glycerin, umfaßt sowie ein Mittel enthält, das eine kovalente Bindung des N-Acyl-α-aminosäureester-hydrochlorids an die Folie, den Schwamm oder das Schwammtuch bewirkt, wobei das Mittel Mono- oder Dialdehyde oder Polyamin-Polyamid-Epichlorhydrin-Harze umfaßt, und die Behandlung vorzugsweise durch Aufsprühen der Lösung, Eintauchen in ein Tränkbad, das die Lösung enthält, oder Antragen der Lösung mit Hilfe eines Walzenantragswerks erfolgt.

## Claims

1. An antimicrobial film based on biopolymers or textile material or antimicrobial sponge or antimicrobial sponge cloth based on regenerated or precipitated cellulose, wherein the film or the sponge cloth is impregnated or coated with at least one α-amino acid ester of a basic amino acid, the α-amino group of which is acylated with a fatty acid, or the hydrochloride thereof, wherein the α-amino acid ester is covalently bound to the film, the sponge or the sponge cloth.

2. The film as claimed in claim 1, wherein the basic amino acid is arginine, histidine or lysine.

3. The film as claimed in claim 1, wherein the α-amino acid ester is additionally ionically bound to the film, the sponge or the sponge cloth.

4. The film as claimed in claim 1, wherein it is tubular and the outside is impregnated or coated with the acylated α-amino acid ester or the acylated α-amino acid ester hydrochloride.

5. The film as claimed in claim 1, wherein the biopolymers are polysaccharides, proteins or mixtures thereof, preferably cellulose, starch, alginic acid/alginate, collagen, collagen fibers, gelatin or mixtures thereof.

6. The film as claimed in claim 4, wherein it is a film based on regenerated or precipitated cellulose which comprises a reinforcement made of a fiber paper.

7. The film as claimed in claim 4, wherein it is a film based on coated textile material.

8. The sponge cloth as claimed in claim 1, wherein it comprises a reinforcement made of fibers, preferably made of cotton fibers, or made of a plastic net, wherein the fibers preferably have a length of 0.3 to 25 mm.

9. The film or sponge cloth as claimed in claim 1, wherein the acylated α-amino acid ester hydrochloride is N^{α}-lauroyl-L-arginine ethyl ester monohydrochloride (LAEC1), N^{α}-lauroyl-L-arginine methyl ester monohydrochloride (LAMCl) or N^{α}-lauroyl-L-lysine ethyl ester monohydrochloride (LLECl).

10. The film or sponge cloth as claimed in one or more of claims 1 to 9, wherein the acylated α-amino acid ester or the hydrochloride thereof is covalently bound to the film or sponge cloth material using mono- or dialdehydes or polyamine-polyamide-epichlorohydrin resins.

11. The film or sponge cloth as claimed in one or more of claims 1 to 10, wherein the acylated α-amino acid ester or the hydrochloride thereof is combined with at least one further antibacterially active agent, preferably with a para-hydroxybenzoic acid alkyl ester or a salt thereof, benzoic acid or a benzoate, sorbic acid or a sorbate.

12. A process for producing a film, a sponge or a sponge cloth as claimed in one or more of claims 1 to 11, which comprises treating it with a solution of at least one N-acyl-α-amino acid ester hydrochloride, wherein the solution comprises as solvent, preferably water and a monohydric or polyhydric alcohol, particularly preferably ethanol, propanediol, polyethylene glycol or glycerol, and also contains an agent that effects a covalent bond of the N-acyl-α-amino acid ester hydrochloride to the film, the sponge or the sponge cloth, wherein the agent comprises mono- or dialdehydes or polyamine-polyamide-epichlorohydrin resins, and the treatment proceeds preferably by spraying on the solution, immersion into an impregnation bath that contains the solution, or applying the solution using a roller applicator.

## Revendications

1. Feuille avec apprêt antimicrobien à base de biopolymères ou d'une matière textile ou éponge avec apprêt antimicrobien ou tissu éponge avec apprêt antimicrobien à base de cellulose régénérée ou précipitée, **caractérisé en ce que** la feuille ou le tissu éponge est imprégné ou revêtu avec au moins un ester d'acide α-aminé d'un acide aminé basique, dont le groupe α-aminé est acylé avec un acide gras, ou avec le chlorhydrate de celui-ci, l'ester d'acide α-aminé étant lié de façon covalente à la feuille, à l'éponge ou au tissu éponge.

2. Feuille selon la revendication 1, **caractérisée en ce que** l'acide aminé basique est de l'arginine, de l'histidine ou de la lysine.

3. Feuille selon la revendication 1, **caractérisée en ce que** l'ester d'acide α-aminé est lié en plus de façon ionique à la feuille, à l'éponge ou au tissu éponge.

4. Feuille selon la revendication 1, **caractérisée en ce qu'**elle est en forme de tuyau et **en ce que** le côté extérieur est imprégné ou revêtu avec l'ester d'acide α-aminé acylé ou avec le chlorhydrate d'ester d'acide α-aminé acylé.

5. Feuille selon la revendication 1, **caractérisée en ce que** les biopolymères sont des polysaccharides, des protéines ou des mélanges de ceux-ci, de préférence de la cellulose, de l'amidon, de l'acide d'algine ou de l'alginate, du collagène, des fibres de collagène, de la gélatine ou des mélanges de ceux-ci.

6. Feuille selon la revendication 4, **caractérisée en ce qu'**il s'agit d'une feuille à base de cellulose régénérée ou précipitée qui comprend un renfort en papier de fibres.

7. Feuille selon la revendication 4, **caractérisée en ce qu'**il s'agit d'une feuille à base de textile revêtu.

8. Tissu éponge selon la revendication 1, **caractérisé en ce qu'**il comprend un renfort en fibres, de préférence en fibres de coton, ou en un filet synthétique, les fibres ayant de préférence une longueur comprise entre 0,3 et 25 mm.

9. Feuille ou tissu éponge selon la revendication 1, **caractérisé en ce que** le chlorhydrate d'ester d'acide α-aminé acylé est un monochlorhydrate d'ester éthylique de N^{α}-lauroyl-L-arginine (LAECI), un monochlorhydrate d'ester méthylique de N^{α}-lauroyl-L-arginine (LAMCI) ou un monochlorhydrate d'ester éthylique de N^{α}-lauroyl-L-lysine (LLECI).

10. Feuille ou tissu éponge selon une ou plusieurs des revendications 1 à 9, **caractérisé en ce que** l'ester d'acide α-aminé acylé ou le chlorhydrate de celui-ci est lié de manière covalente à la matière de la feuille ou du tissu éponge à l'aide de monoaldéhydes ou dialdéhydes ou de résines de polyamine-polyamide-épichlorhydrine.

11. Feuille ou tissu éponge selon une ou plusieurs des revendications 1 à 10, **caractérisé en ce que** l'ester d'acide α-aminé acylé ou le chlorhydrate de celui-ci est combiné à au moins un autre agent antibactérien, de préférence un ester alkylique d'acide para-hydroxy-benzoïque ou un sel de celui-ci, un acide benzoïque ou un benzoate, un acide sorbique ou un sorbate.

12. Procédé de fabrication d'une feuille, d'une éponge ou d'un tissu éponge selon une ou plusieurs des revendications 1 à 11, **caractérisé en ce qu'**elle est traitée avec une solution d'au moins un chlorhydrate d'ester d'acide α-aminé N-acyle, la solution comprenant comme solvant de préférence de l'eau et/ou un alcool à une ou plusieurs valences, particulièrement de préférence de l'éthanol, du propanediol, du polyéthylène glycol ou de la glycérine, et contenant un agent qui établit une liaison covalente du chlorhydrate d'ester d'acide α-aminé N-acyle à la feuille, à l'éponge ou au tissu éponge, l'agent comprenant des monoaldéhydes ou dialdéhydes ou des résines de polyamine-polyamide-épichlorhydrine, et le traitement s'effectuant de préférence par pulvérisation de la solution, par plongée dans un bain d'imprégnation qui contient la solution ou par application de la solution à l'aide d'un outil d'application à rouleau.
